# EUROPEAN PATENT SPECIFICATION

(11) **EP 4 398 061 B1**
(45) Date of publication and mention of the grant of the patent: **17.09.2025**
(21) Application number: 23150488.7
(22) Date of filing: 05.01.2023
(51) Int. Cl.: G05D 1/00

(54) **TECHNIQUES TO PROVIDE A ROUTE PLANNING OF A MOBILE RADIO-CAPABLE USER DEVICE**
VERFAHREN ZUR BEREITSTELLUNG EINER ROUTENPLANUNG EINER MOBILFUNKFÄHIGEN BENUTZERVORRICHTUNG
TECHNIQUES POUR FOURNIR UNE PLANIFICATION D'ITINÉRAIRE D'UN DISPOSITIF UTILISATEUR POUVANT COMMUNIQUER PAR RADIO MOBILE

(43) Date of publication of application: 10.07.2024
(73) Proprietor: Deutsche Telekom AG, 53113 Bonn (DE)
(72) Inventor: Aleksiev, Vasil, 2200 Wien (AT)
(74) Representative: Braun-Dullaeus Pannen Emmerling Patent- & Rechtsanwaltspartnerschaft mbB

(56) References cited:
- WO-A1-2021/134522
- KR-A- 20180 121 758
- US-A1- 2021 103 294
- US-A1- 2022 116 814

## Description

The invention relates to a method, a system and a routing planning unit to provide a route planning of an UAV.

Efforts are currently being made in standardization boards to enable enhancements on remote controlled operation, or even autonomous driving and/or flying, of user devices, vehicles, missiles, etc. in radio networks. In particular, efforts are being made in this regard to establish uniform standards.

WO 2019/016386 A1 describes a wireless communication network comprising several base stations that are to communicate with a vehicle by radio during its route. To improve the handover process, a coordination unit prepares in advance a list of when the vehicle will arrive at specific base stations and at what times, and communicates this information to the base stations. Based on this information, the base stations can prepare in advance for the handover process so that it can be executed as smoothly and quickly as possible.

US 2022/01168 A1 discloses a Network Data Analytic Function (NWDAF) which may assist an application server by determining a quality of server (QoS) or delivery timing requirements can be met along a route.

In this context, there are discussions, especially at the 3GPP SA1 committee, about additional functionalities of drones, i.e. uncrewed aerial vehicles, which are also referred to as UAVs. There is already a use case regarding the flight preparation of such UAVs, where an authorization unit, in particular designed as a UTM (Uncrewed Aerial System Traffic Management), hands over to the 5G radio network the total flight route to be taken together with QoS requirements. In this case, the 5G system has functionality to send the predicted QoS values of each of the waypoints along that route for the corresponding radio cells to the UTM. The UTM can then determine the final route. Since the UTM does not know in advance what the QoS capacities of the radio cells on the requested route are, the UTM may have to request new routes from the 5G radio network many times if one of the radio cells on the requested route does not meet the QoS capacities.

At this point in time, it is also not clear to us within the corresponding 3GPP how such a service is to be formed exactly. In any case, it is disadvantageous in terms of data security if the 5G system discloses reports about the QoS capacities of its radio stations by sending them to the UTM. Even if such an exchange of data usually only takes place after prior authentication of the two parties, it still discloses infrastructure-critical data that can be used for specific attacks on the radio network. For example, certain radio cells can be deliberately overloaded, especially at certain times.

Accordingly, it is the task of the invention to provide techniques that at least partially eliminate the disadvantages of the prior art.

This object is solved by the features of the independent claims.

The features of the various aspects of the invention described below or the various examples of implementation may be combined with each other, unless this is explicitly excluded or is technically impossible.

According to the invention, a method for route planning for a mobile radio-capable user device or a user equipment is disclosed. The mobile user device or the user equipment is a drone, which is also referred to as an Uncrewed Aerial Vehicle (UAV). The standard describes the mobile radio-capable user device as a user equipment this has to be understood in that way that the mobile radio-capable user device and the user equipment are technically identical. The mobile user device receives control signal and route information by means of a 3GPP radio network. The mobile user device is remotely controlled by means of a control module (UAV-C), and moves autonomously from the starting point to the destination point. For case of a remotely controlled flight, the control module is also in a data exchange with the radio network and can send data to the movable user device by means of the radio network. The radio network may be a radio network according to the 4G, the 5G standard or a future standard (e.g., 6G). The method comprises the following steps:
- Providing QoS requirements of the mobile user device along with the start point and the destination point of the mobile user device to a communication interface of the radio network and/or to a communication interface of a route planning unit;
   ∘ The QoS requirements, the start point and/or the destination point of the user device can be provided by various entities, for example the user device (e.g. the UAV) itself, the control module (UAV-C) of the user device, a service provider, an authorization entity and/or a managing entity, such as the UTM. In Germany, for example, the UTM may be provided by the "Deutsche Flugsicherung" (German Air Traffic Control), which monitors, approves and controls German air traffic;
   ∘ If the route planning unit is used, it can be part of the radio network but it can also be a stand-alone unit that is configured to communicate with the radio network. However, it is preferred that the route planning unit is part of the radio network. In his case only the communication interface of the radio network is needed.
   ∘ By means of the communication interfaces of the radio network or the route planning unit, the corresponding data are sent to the route planning unit;
   ∘ preferably the route planning unit is associated with the 3GPP radio network;
   ∘ the route planning unit can be implemented as a functionality by means of software at servers within the radio network, in particular at the UAE-server, the UASNF or the VAE server; in that sense the route planning unit can be a virtual unit by means of software;
- Calculating a possible route between the starting point and the destination point, wherein the mobile user device shall traverse radio cells along the route and communicate with these radio cells;
   ∘ the calculating a possible route is done by a route planning algorithm implemented on a server of the radio network, this route planning algorithm can be realized as a functional software unit that is called the route planning unit;
   ∘ the calculating a possible route can be done by the stand-alone route planning unit;
   ∘ in this sense, the route thus comprises at least a plurality of waypoints, the waypoints guiding the mobile user device through the respective radio cells, each of which has binding points for establishing a radio link, in particular base stations. The base stations are in particular 5G base stations, in particular, the waypoints have smaller granularity than a radio cell that means that a radio cell can comprise multiple waypoints;
   ∘ the mobile user device receives control signal and route information from these particular radio cells and send its operational data to these radio cells, which can be forwarded to a control module of the user device in order to remotely control the UAV.
- Requesting QoS capacities of the radio cells along the possible route;
   ∘ the QoS capacities of the radio cells, in particular in combination with the QoS capacities of the core network, are requested by the route planning unit from the radio network; means for detecting the capacities of the radio cells can be provided for this purpose, and these means can in particular be an integral part of the 5G radio network. For example, a 5G network data analytics function (NWDAF) can be used for this purpose. NWDAF is a 5G 3GPP standard method used to collect data from user device, network functions, and operations, administration, and maintenance (OAM) systems, etc. from the 5G Core, Cloud, and Edge networks that can be used for analytics. The NWDAF can be implemented on a server of the 5G radio or core network; the NWDAF can predict QoS capacities of a respective requested radio cell in a time-resolved manner, in particular based on historical data. For the prediction, it is also possible to use a trained neural network, which can be proved with corresponding training data; means for detecting the capacities may be referred to below as NWDAF module;
   ∘ The means for detecting the capacities can dynamically, in particular if the QoS capacities of the function have deteriorated compared to the prediction, communicate current QoS capacities of the function to, for example, the routing unit, the user device, the control module, and/or the authorization unit so that measures can be taken if necessary;
- Verification that the QoS capacities of each radio cell along the route meet the QoS requirements:
   ∘ If each radio cell along the route meets the QoS requirements: Provide as output the possible route as a route to be taken by means of the communication interface of the radio network or the route planning unit to the mobile user device, the control module, the UTM and/or the authorization unit. The aforementioned receivers of the route to be performed can in turn exchange this data with each other via a communication network. For example, the route to be performed, after being approved by the UTM or the authorization unit, can be sent to the control module and/or the mobile user device so that the route can be flown.

In this case, it is ensured that the UAV, can reliably communicate along its entire route and therefore safely traverse the route to be taken. In particular, in this case, the UAV can be reliably controlled remotely by an operator at any time or a fully automated mobile user device can receive necessary traffic information, etc. If the QoS requirements are ensured, the radio network provides the route to the UAV, for example by reserving the corresponding QoS capacities along the route or based on statistical probabilities if the likelihood is over a predefined threshold that the QoS capacities can be provided.

The method now also has the advantage that the radio network no longer has to disclose QoS capacities of its radio cells, but merely confirms that the route to be taken is capable of reliably providing the QoS capacities. In addition, route planning is significantly faster and more efficient because, unlike in the prior art, the computation is offloaded from the UTM to the radio network's route planning unit. In the previous case, it is disadvantageous that the UTM calculates a route in advance, then asks whether each waypoint along this route has the necessary QoS capacity. The UTM evaluates the response in terms of QoS capacities and may conclude that the QoS requirements are not met for every waypoint on the proposed route. In this case, the UTM creates an alternative route without knowing the QoS capacities of the radio cells. The UTM can create the alternative route because it can manage all flight traffic. So again, the UTM does not know in advance whether the new radio cells included in the route meet the QoS requirements. This can lead to a lengthy ping-pong game between the UTM and the network. However, by transferring the route planning task to the route planning unit, it is advantageously exploited that this very route planning unit, since it is assigned to the radio network, can take knowledge of the QoS capacities into account and efficiently create an appropriate route.

In the event that at least one radio cell along the route does not meet the QoS requirements, the route planning unit recalculates another possible route, taking into account the at least one radio cell that did not meet the QoS requirements, and check this again with regard to the QoS requirements. Since this all takes place internally in the route planning unit, this also advantageously prevents the need to exchange data regarding unsuitable routes between the radio network and the UTM. Thus, the UTM does not have to recalculate an alternative route, send a request to the radio network, and then verify the route. During recalculation, therefore, the at least one radio cell that does not meet the QoS requirements can be excluded from the route in particular.

The possible route is calculated based on the criterion of the highest reliability. This criterion advantageously enables the algorithm on the route planning unit to calculate a route in a targeted manner. The criterion may additionally comprise the shortest route, the shortest time duration or the economic route.

In particular, it is possible that the criterion can be set by a user, i.e. in particular the operator who controls the mobile user device (in particular the drone) via the control module. For example, the operator can make appropriate inputs via a user interface. In the case of the highest reliability, radio cells are preferably selected whose QoS capacities have a predefined margin with respect to the QoS requirements, so that slight deviations in the performance of the corresponding base station do not lead to problems; in particular, a detour can be accepted with respect to this criterion. In the case of the economic route, energy can be saved in particular. The shortest time duration is advantageously specified if the UAV is to reach its destination as quickly as possible. The shortest route usually has the advantage that fewer radio cells are traversed, which can be advantageous with regard to the provision of QoS capacities.

In one embodiment, a start time and/or arrival time of the user device are transferred to the route planning unit by means of the communication interface.

This has the advantage that the route planning unit can query time-resolved QoS capacities from the radio network. For example, it is known that there is less data traffic in the radio cells at night - so the QoS capacities of the radio cells are higher. The time-resolved query for the QoS capacities thus makes it possible to calculate the route more efficiently and reliably, especially with regard to the aforementioned criteria. If only the start time or arrival time of the is transferred, this results in a further degree of freedom for the route planning unit to be able to calculate the route in such a way that the radio network is used as efficiently as possible. If, for example, the arrival time is set for 8:00 a.m. at the latest and it is known that data traffic increases rapidly from 7:00 a.m. onwards, the start time of the mobile user device can be set to 6:00 a.m., for example, since the user device is then on the move for at least 1 hour at low data traffic times.

Preferably, a map with non-usable areas and/or non-usable (forbidden) radio cells is transferred to the route planning unit by means of the communication interface. Alternatively, geographical area coordinates as a forbidden area are transferred to the route planning unit by means of the communication interface. Such a map or such geographical area coordinates can be provided to the route planning unit by the UTM, for example. Non-usable radio cells can be those whose area is in principle forbidden for air traffic for UAVs, for example in the vicinity of airports or critical infrastructures, or which are already used by other UAVs and are therefore already occupied. By providing such a map, the route planning unit can calculate the route to be taken much more efficiently, because it cannot be assumed that the route to be taken will be rejected by the UTM.

In a preferred embodiment, the calculation of the possible route has speed information, in particular speed vectors for the individual radio cells. This has the advantage that the UAV can adjust its speed within radio cells. This can be helpful to avoid collisions with other UAV or to accelerate or delay the arrival in certain radio cells until the corresponding QoS capacities are available there. In particular, it may also be envisaged that the speed information causes a momentary slowdown, for example of 5 seconds, when transitioning from one radio cell to another radio cell to enable the smoothest possible handover process.

In a preferred embodiment, the route to be taken takes the user device along areas within a radio cell that are also covered redundantly by an adjacent radio cell. The coverage areas of radio cells generally do not change abruptly, so that border areas of radio cells in particular can be served by different base stations. If the route to be taken leads along such border areas that are served by at least two overlapping base stations, it may be possible to compensate for at least a short failure of one of the two base stations by the other base station.

In a preferred embodiment, the route planning unit informs the base stations on the route to be taken of an identity of the mobile user device, the required QoS and/or the calculated time of arrival in the corresponding radio cell in advance.

This information in advance has the advantage that the corresponding base stations can prepare for the handover process and set up corresponding resources with regard to the QoS requirement so that the handover process works smoothly. The information about the identity of the UAV has the advantage that the corresponding resources are not allocated to any other UAV. For this purpose, when the UAV contacts the base station, it sends data that includes its identity.

Usefully, the route planning unit can monitor the QoS capacities of the radio cells of the route to be performed, in particular dynamically, and take measures if the QoS requirements for a radio cell along the route to be performed cannot be ensured.

This offers the advantage of not having to rigidly adhere to the route to be performed once the UAV's flight has begun, allowing for dynamic response to changing situations.

In one embodiment, the measures include: a change in velocity vectors, an emergency stop signal, and/or a recalculation of the route to be traveled.

Changing the speed vectors is particularly advantageous if, for example, only a brief disturbance occurs in radio cells to be traversed in the future. An emergency stop signal is particularly advantageous if the current and/or the following radio cell fails or no longer meets the QoS requirement. Recalculation of the route to be taken can then be useful if one or more radio cells that no longer fulfill the QoS requirement can be bypassed in this way.

The route to be taken may select radio cells along a provided UAV highway. A UAV highway of radio cells is to be understood as meaning that the corresponding radio cells are specifically configured for UAV air traffic. This may mean that appropriate resources are provided, specific hardware is provided, a radio cell size is optimized with respect to UAV air traffic, and/or may be provided far from cities and other critical infrastructure that may technically or regulatory conflict with UAV air traffic. Such a UAV highway may also be particularly set up to provide the shortest possible flight distance between major cities. Because such a UAV highway is specifically set up for the UAVs, its use is obviously advantageous in terms of efficiency and/or safety.

Preferably, the route to be taken is provided to an authorization unit. Technically, this authorization unit can be designed as the UTM, which in particular can monitor and manage all air traffic (including that of airplanes and helicopters). In Germany, for example, the UTM is the "Deutsche Flugsicherung" (German Air Traffic Control).

The authorization unit can reject the route to be performed and send a recalculation request of the route to the route planning unit, whereupon the recalculation of the further possible route by the route planning unit takes place. This has the advantage that a recalculation of the route to be performed takes place, especially if the proposed route to be performed is in conflict with the rest of the air traffic and/or other regulations managed by the local currency unit, i.e. especially the UTM.

According to a second aspect of the invention a 3GPP radio network is disclosed, wherein the radio network is configured to execute the steps of the method described above.

According to a third aspect of the invention, a route planning unit for route planning of a UAV, is disclosed. The route planning unit can be realized as a functional software unit that is called the route planning unit within the radio network or as a stand-alone unit in communication with the radio network. The UAV receives control signal and route information by means of the radio network, wherein the route planning unit is arranged to execute the method according to the method described above. The route planning unit comprises:
- a communication interface is designed
   ∘ i) for receiving QoS requirements of the user device, the start point and the destination point of the user device; this information may be sent, for example, by the mobile user device itself, by the UTM, by a UAV service provider and/or or by the operator via its control module;
   ∘ ii) for requesting and receiving QoS capacities; the QoS capacities request can be made in particular by means of an NWDAF and also be provided by this functionality; it is also possible that a separate unit for providing QoS capacities is provided in the radio network and/or is assigned to the radio network;
   ∘ iii) to send a calculated route; the calculated route to be taken can be first transmitted to the authorization unit, i.e. in particular the UTM, which, after accepting the route to be performed, sends the information to the operator's control module or directly to the UAV;
- a processor on which a route planning algorithm is implemented, the route planning algorithm being set up to calculate a possible route between the starting point and the destination point according to a criterion, based on the starting point and the destination point, the route planning algorithm being set up to request at least the QoS capacities of the radio cells on the calculated route and to compare them with the QoS requirements of the user device, the route planning algorithm being set up to send the possible route as a route to be taken in the form of a data signal by means of the communication interface.

The advantages of such a route planning unit are essentially analogous to those discussed above in connection with the method according to the invention.

According to a third aspect of the invention, a system for route planning of a UAV, is disclosed. The UAV receives control signal and route information by means of the radio network. In particular, the system is arranged to perform the method described above and comprises:
- a radio network, for example a 5G radio network and/or a higher generation radio network, comprising radio cells with base stations arranged for communication with the mobile user device, the radio cells providing QoS capacities; furthermore, it is possible to exchange control signals and/or route information and/or status information via the radio cells by radio;
- Means to capture QoS capacities of radio cells;
   ∘ this may be a dedicated capacity acquisition module set up to have access to the necessary data of the radio cells of the radio network; this functionality can also be provided, in particular in a 5G core network, by functions that a virtual capacity acquisition unit can form. For example, the NWDAF already implemented in the 5G core network can be used for this purpose. In general, it is known to the skilled person how the different units of the system communicate with each other. Existing interfaces, interfaces, data channels and/or APIs can be used for this purpose.
- the route planning unit described above.

The advantages of this system according to the invention are essentially analogous to those discussed above in connection with the process according to the invention.

In a preferred embodiment of the invention, the route planning unit is part of the 3GPP system, in particular part of a 5G core network (or a radio network of a higher standard) or has an interface to the 5G core network.

In the first case, the route planning unit is implemented directly in the 5G network and can thus simply query the QoS capacities of the radio cells. However, these queries concern an application layer that is typically not part of the 5G core network, so that the internal structure of the 5G core network may have to be partially redesigned. In the second alternative, the route planning unit is part of a data network, in particular the 3GPP system of a mobile network operator that also operates the core network, and has a defined interface, in particular an API to the 5G Core network. By means of this interface, the route planning unit can, for example, call the NWDAF functionality of the 5G Core network and thereby obtain the corresponding information about the QoS capacities of the radio cells. In this alternative, already existing functionalities and interfaces can be used easily and efficiently. If the data network also belongs to the operator of the 5G Core network, as described above as a preferred embodiment, this can also ensure that only a minimum of information about the radio cells is published.

In a preferred embodiment, the system comprises an authorization unit for enabling the route to be taken. The advantages have been discussed above in connection with the method.

In a preferred embodiment, a subset of the radio cells of the radio network are arranged as a UAV highway and/or are correspondingly engineered. The advantages of these features have already been discussed above in connection with the method.

According to a fourth aspect of the invention, there is disclosed a computer program comprising instructions which, when the program is executed by a computer, in particular by the route planning unit, cause the computer to perform the steps of the method according to the invention.

### Figures

In the following, preferred implementation examples of the present invention are explained with reference to the accompanying figure:
- Fig. 1:: shows a UAS application layer functional model with UAV-C having network-assisted connectivity with UAV according to a first embodiment of the invention.
- Fig. 2:: summarizes schematically the data flow of the calculation of the flight route according to Fig. 1.
- Fig. 3:: shows a logical 5GS and EPS architecture for UAV;
- Fig. 4:: summarizes schematically the data flow of the calculation of the flight route according to Fig. 3.
- Fig. 5:: shows an UAV highway according to the invention;

In the following, the invention is described by way of an UAV (UAV = Uncrewed Aerial Vehicle).

At first, some abbreviations are being introduced:
UAV-C is the Uncrewed Aerial Vehicle Controller. QoS is Quality of Service. UAS is the Uncrewed Aerial System. UTM is the UAS Traffic Management. USS is the UAS Service Supplier. UAS is Uncrewed Aerial System. The UAS application enabler layer shall support one or more UAS applications. The UAS application specific client provides the client side functionalities corresponding to the UAS applications (e.g. Client interacting with USS, UTM). The UAS application specific client utilizes the UAE client for the UAS application layer support functions. The UAS application specific server provides the server side functionalities corresponding to the UAS applications (e.g. USS, UTM, route planning unit). The UAS application specific server utilizes the UAE server for the UAS application layer support functions. The UAE client supports interactions with the UAS application specific client(s).

The UAE server provides the server side UAS application layer support functions as below: i) performing group based QoS management for the UAS (i.e. pair of UAV and UAV-C) by using SEAL APIs; ii) receiving C2 operation mode configuration from UAS application specific servers (e.g. USS/UTM) and further configuring the UAS UEs (i.e. UAV, UAV-C); iii) triggering C2 communication mode switching with the UAS UEs; iv) receiving and storing the selected C2 communication modes from the UAS UEs; v) monitoring the real-time status of UAS UEs by using SEAL APIs; and/or vi) supporting UAV application message communications between UAVs. The SEAL client and/or the SEAL server can support i) location management; ii) group management; iii) configuration management; iv) identity management; v) key management; and/or vi) network resource management.

UAS NF: The "UAS Network Function" is supported by the NEF or SCEF+NEF and used for external exposure of services to the USS. The UAS-NF makes use of existing NEF/SCEF exposure services for UAV authentication/authorization, for UAV flight authorization, for UAV-UAVC pairing authorization, and related re-authentication/re-authorization and revocation; for location reporting, presence monitoring, obtaining list of Aerial UEs in a geographic area and control of QoS/traffic filtering for C2 communication.

It follows a reference point description:
U1-AE: The interactions related to UAS application layer support functions between UAE client and UAE server are supported by U1-AE reference point.

Us: The interactions related to UAS application layer support functions between the UAE server and the UAS application specific server are supported by Us reference point.

Uc: The interactions related to UAS application layer support functions between the UAE client and the UAS application specific client are supported by Uc reference point.

SEAL-C and/or SEAL-S: The following SEAL-C and/or SEAL-S the reference points specified in can be supported: i) LM-C reference point for location management; ii) GM-C reference point for group management; iii) CM-C reference point for configuration management; iv) IM-C reference point for identity management; v) KM-C reference point for key management; and/or vi) NRM-C reference point for network resource management.

SEAL-UU: The SEAL-UU reference points can support: i) LM-UU reference point for location management; ii) GM-UU reference point for group management; iii) CM-UU reference point for configuration management; iv) IM-UU reference point for identity management; iv) KM-UU reference point for key management; and/or vi) NRM-UU reference point for network resource management.

UAE- E: The interactions related to UAS application support functions between the UAE servers in a distributed deployment are supported by UAE-E reference point.

The reference points between the UAS application layer and the 3GPP network systems (EPS, 5GS) are described in the following.

Rx: The reference point Rx supports the interactions between the UAS application server and the PCRF. The functions for Rx reference point are supported by the network resource management server of the SEAL.

MB2-C: The reference point MB2-C supports the control plane interactions between the UAS application server and the BM-SC. The functions for MB2-C reference point are supported by the network resource management server of the SEAL.

MB2-U: The reference point MB2-U supports the user plane interactions between the UAS application server and the BM-SC. The functions for MB2-U reference point are supported by the UAE server.

xMB-C: The reference point xMB-C supports the control plane interactions between the UAS application server and the BM-SC. The functions for xMB reference point are supported by the network resource management server of the SEAL.

xMB-U: The reference point xMB-U supports the user plane interactions between the UAS application server and the BM- The functions for xMB-U reference point are supported by the UAE server.

T8: The reference point T8 supports the interactions between the UAS application server and the SCEF. The functions of T8 interface are supported by UAE server and the functions related to location management of T8 are supported by the location management server.

N33, Nnef: The reference point N33 supports the interactions between the UAS application server and the NEF. Nnef is the service based interface exposed by the NEF as per the N33 reference point. The functions of Nnef interface are supported by UAE server and the functions related to location management of Nnef are supported by the location management server.

For further reference the documents **Fehler! Verwenden Sie die Registerkarte 'Start', um ZA dem Text zuzuweisen, der hier angezeigt werden soll.**3GPP TS 23.256 V17.4.0 (2022-09), 3GPP TR 22.843 V0.1.0 (2022-09) are hereby fully included in this application text.

An embodiment of the invention can be described as follows:
A UAV 105, a control module 110 (a UAV-C 110), and/or a UTM 115 can provide the start point and the end point of a specific flight together with the requested QoS and/or QoE values. Then a radio network 120, in particular a 5GS network 120, can provide the binding points, in particular the cells, or areas the UAV 105 can use for its flight.

In principle, this can be realised on different levels as currently there is 5G network functionality dealing with UAVs - UAS NF defined in TS23.256 (3GPPSA2). There is also application enabler functionality, which is standardized in 3GPPSA6 - UASAPP, defined in TS23.255. What is defined in SA6 is not part of the 5G core network - it is deployed after the N6 interface and is part of a data network. In this case, the UAE (UAS application enabler can provide USS functionality).

The concept of waypoints is already defined in RAN TR36.777. A waypoint is a point where the UAV can be at a specific time, list of waypoints together with time define the flight route. The UTM can provide to 5GS, USS, and/or UAS NF start point and end point, respectively the USS, UAS NF functionality can link the specific waypoints with preparing additional ones in between having in mind the available QoS. USS, UAS NF can check internally with NWDAF about the predicted QoS in a geographical area (currently NWDAF supports only cell level statistics) and decide which waypoints would fit better according to the requested QoS to generate and calculate the possible route. Thus, the 5GS can also define specific highways where to provide this specific service for UAVs - having in mind the specific radio interference which UAV can cause.

After having the input from UTM, checking with NWDAF, the USS/UAS NF can reply the UTM the specific list of waypoints, which is the calculated route to be taken. The UTM can communicate the respective route with the UAV and approve the respective flight start.

There are several possibilities for providing such service.

A UAE layer can deployed after the N6 and being part of a data network to be responsible for such communication and preparing and calculating the route of the list of waypoints of the UAV. If the service is being defined in SA6/UAE layer and is being part of the data network such service is supporting the application layer.

It is also possible to have the UAS NF (part of 5GC) to communicate with UTM and to prepare the flight route according to the input data.

One possibility is to have one general registration with general claim for the 5GS (independent if UASNF or UAE-S provides the solution) preparing flight route while second one can be detailed message exchange/ procedures for UASNF and UAE-S (detailed message exchange can be filed later when respective work comes to SA2/SA6). Other possibility is to have two registrations for each possible implementation (SA2, SA6). The SA6 solution could use also the ADAES instead of NWDAF. In ADAES (application data analytics enablement service) there is possibility for QoE sustainability analytics). Third possibility is to have only one registration.

Fig .1 shows a UAS application layer functional model 100 with UAV-C having network-assisted connectivity with UAV according to a first embodiment of the invention.

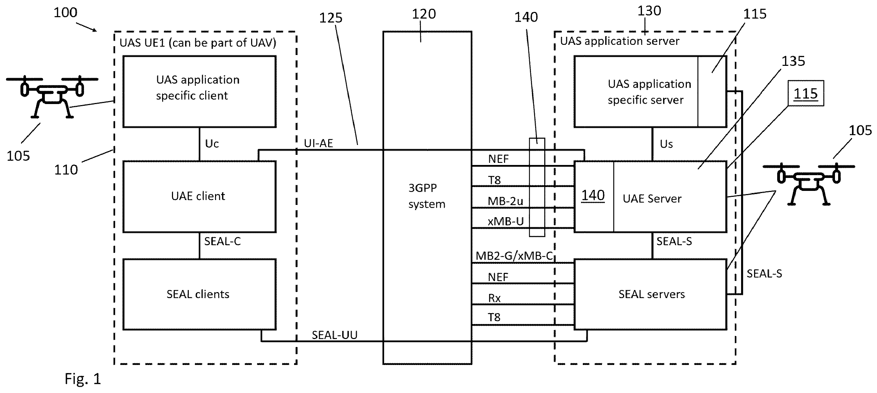

Fig. 1 shows a UAV 105 that is been configured to fly from starting point to an end point and to provide certain services like delivering something for users or remotely checking certain areas by camera means or the like. A UAV-C 110 is being designed as a UAS UE1 that can serve as a controller module 110 that can comprise an UAS application-specific client, an UAE client and a SEAL client, which are in a data connection. The UAV-C 110 can be implemented on a server and/or a distributed server environment.

Users can put a flight route request by means of the controller module 110 and provide a starting point and an endpoint along with the corresponding QoS requirements via a data network 125 to an UAS application server 130. The UAS application server 130 comprises a UAS application specific server, a UAE server 135 and a SEAL server that can communicate with each other. In particular, the information is being provided to the UAE server 135 or to an USS. For the communication of this information, the UAE client can communicate over a U1-AE reference point for the UAE server 135 and the SEAL client can communicate via a SEAL-UU reference point with the SEAL server. The UAE server 135 can be deployed by an MNO or by a third party that acts as an USS.

It is also possible that the UAV 105 provides the starting point and the endpoint along with the corresponding QoS requirements via the data network 125 to the UAS application server 130. In principle, the UAV 105 could use the same reference points as the controller module 110 to communicate with the UAE server 135 and/or the UAV 105 could establish dedicated reference points for this purpose.

It is also possible that a UTM 115 provides the starting point and the endpoint along with the corresponding QoS requirements via the data network 125 to the UAS application server 130. The UTM 115 can be implemented within the UAS application-specific server or can in principle also be placed outside the UAS application server. The UTM 115 can use the Us to communicate with the UAE server and/or the UTM 115 could establish dedicated reference points for this purpose.

The data network 125 can be run by the network provider that runs a 5G core network 120. In the embodiment of Fig. 1, the data network can be linked to the 5G core network or being part of the 5G infrastructure, but the UAS application server 130 is in this case not part of the 5G core network. This provides the advantage that it is possible to access 5G core network via defined reference points. The has the advantage of that the application layer can be used, by exploding existing routines and network functions without having to make adeptness within the 5G core network.

After the starting point and the endpoint along with the corresponding QoS have been provided to the UAE server 135, they can be provided to a route planning unit 140 that can be implemented on the UAE server 135. The route planning unit 140 is configured to calculate a possible route based on the provided information about the starting point and the endpoint and to check if the radio cells along this route fulfill QoS requirements of the UAV. As already mentioned above, the possible route can be calculated based on certain criteria like the shortest path or the shortest time.

For that purpose, the UAE server 135 can communicate with the 5G core network 120 to receive the required QoS capacity information of the corresponding cells. The UAE server 135 can communicate via the depicted reference points NEF, T8, MB-2u and/or xMB-U with the 5G core network 120, whereas the SEAL server can communicate via the depicted reference points T8, MB2-G/xMB-C, NEF, and/or Rx with the 5G core network 120.

In particular, by using the NEF interface, the NWDAF functionality of the 5G core network 120 can be started to check QoS capacities of the requested radio cells along the route and to send this data to the route planning unit 140. If any radio cell along the route meets the QoS requirements, the route planning unit 140 provides the possible route as the route to be taken as an output.

This proved to be taken can be provided by the route planning unit 140 to the UTM 115 that can approve or reject the route, while a rejection can trigger a recalculation of another route.

It is also possible that the route planning unit 140 is being implemented on a generic server outside the UAS application server but uses the reference points as described above to communicate with the 5G core network 120.

The data about the route to be taken can then be sent to the controller module 110 and/are to the UAV 105 so that the UAV 105 can start its remotely controlled or autonomous flight.

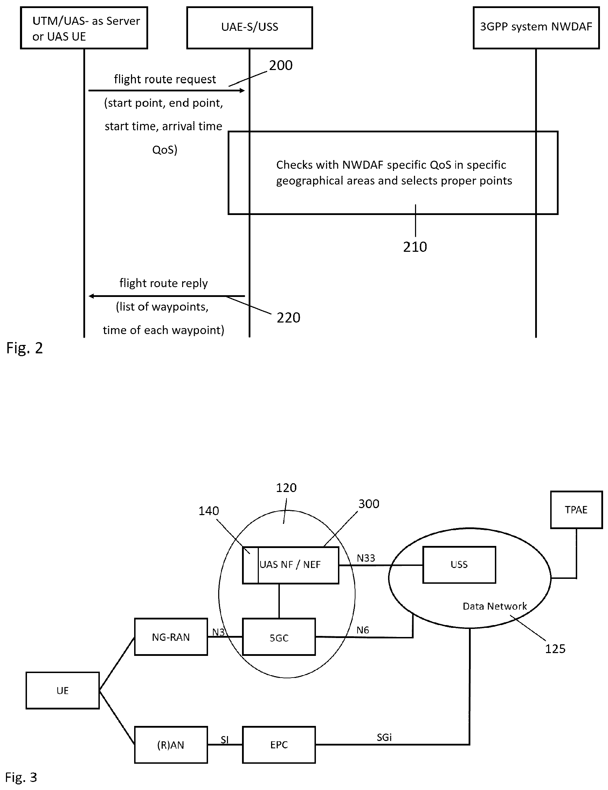

Fig. 2 summarizes schematically the data flow of the calculation of the flight route according to Fig. 1.

In step 200: The UTM 115, the UAV 105, control module 110 and/or the UAS UE can send a flight food request comprising the starting point, the endpoint and the QoS requirements to the UAE-S or the USS.

In step 210: The UAE-S or the USS send this information to the 3GPP system NWDAF that checks the QoS in specific geographical areas and selects proper points along the route by using a route planning algorithm.

In step 220 the flight route is being sent as a list of waypoints to the UTM 115, the UAV 105, control module110, and/or the UAS UE so that the flight can start.

The UAS UE can be a UAV or a UAV controller. The UAV controller can be a third party outside of 3GPP.

Fig. 3 shows a logical 5GS and EPS architecture for UAV. Further details can be found inside the reference document 3GPP TS 23.256 V17.4.0 (2022-09) that is hereby fully incorporated into this text.

In this case, the route planning unit 140 and the route planning algorithm are being implemented within the 5G core network 120. The route planning unit 140 can be implemented at the UAS NF/NEF module 300.

Over the existing N33 and N6 interfaces, a data exchange between the data network 125 and the 5G core network 120, in particular with the UAS NF/NEF module 300 is possible. For example, the UTM 115, the UAV 105, control module 110, the UAS UE, the UAE-S or the USS can send the start point, endpoint and the QoS requirements via the N33 to the UAS NF/NEF module 300. The route planning unit 140 of the UAS NF/NEF module 300 and can then calculate the route that is to be taken and can compare if the individual cells along that path fulfill the QoS requirements of the UAV by using the NWDAF functionality. If the QoS requirements are fulfilled along the calculated food, this information can be sent back via the N33 interface to the data network 125. This embodiment provides the advantage that no further request to the 5G core network about QoS is being necessary because everything already happens inside the 5G network.

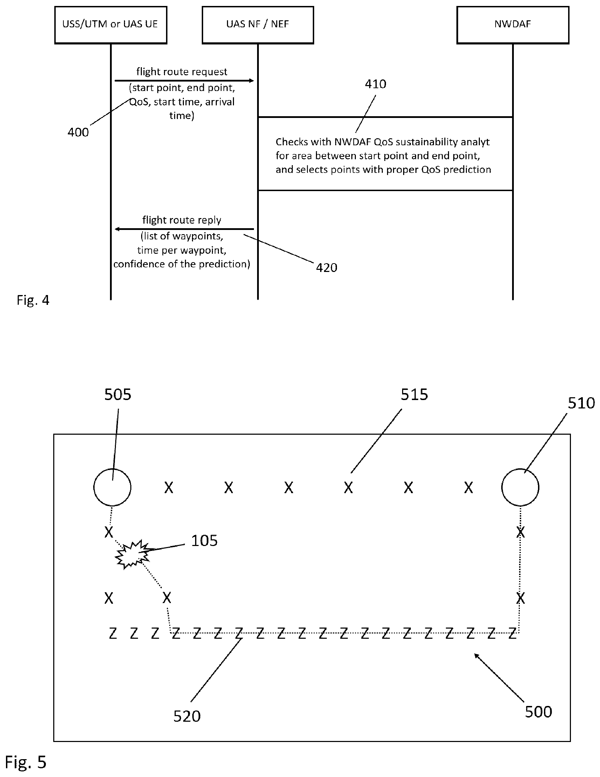

Fig. 4 summarizes schematically the data flow of the calculation of the flight route according to Fig. 3.

In step 400: the USS, the UTM 115 or the UAS UE sends the flight food request comprising the start point, endpoint, corresponding QoS requirements and time points to the UAS NF/NEF.

In step 410: The UAS NF/NEF sends this information to the NWDAF functionality, wherein the NWDAF is part of the 5G core network and provides QoS sustainability analytics. The NWDAF checks the QoS sustainability for areas between the start point and the endpoint and selects points with proper QoS prediction that fulfill the QoS requirements and provides this information to the UAS NF/NEF.

In step 420: The UAS NF/NEF returns the flight route as a list of waypoints, time periods per waypoint and confidence about the predicted QoS capacities to the USS, the UTM 115 or the UAS UE.

Fig. 5 shows an UAV highway 500 according to the invention.

The UAV 105 shall travel from the start point 505, that could be city A 505, two the endpoint 510, that could be city B 510.

There is a direct line between of ordinary radio cells 515 of the 5G network that are symbolized by an "x". The UAV 105 or the control module 110 provide the route planning unit 140 of any of the embodiments described above with the information about the start point, the endpoint and the QoS requirements of the UAV 105.

The route planning unit 140 has knowledge about the UAV highway, wherein the radio cells of the UAV highway are configured and arranged as to best meet the requirements of the UAV 105. Those radio cells 520 of the UAV highway 500 are symbolized by "z". The radio cells 520 of the UAV highway 500 can be closer together and provide slices according to the QoS requirements of various UAV 105.

Hence, the route planning algorithm of the route planning unit 140 calculates the route to be taken by using the radio cells 520 of the UAV highway 500 even if this means that a detour is necessary.

## Claims

1. Method of route planning for a UAV (105), which receives control signal and route information by means of a 3GPP radio network (120), comprising the following steps:
• Providing QoS requirements of the UAV (105) along with a starting point (505) and a destination point (510) of the UAV by means of a communication interface to a route planning unit (140) of the 3GPP network;
• Calculating a possible route comprising a plurality of waypoints between the starting point (505) and the destination point (510) by a route planning algorithm of the route planning unit (140), wherein the UAV (105) shall traverse radio cells along the route and communicate with these radio cells (515, 520), wherein the waypoints have a granularity smaller than the size of the radio cells and wherein the possible route is calculated based on a highest reliability criterion;
• Requesting QoS capacities of the radio cells (515, 520) along the possible route;
• Verification that the QoS capacities of each radio cell (515, 520) along the route meet the QoS requirements:
∘ If each radio cell (515, 520) along the possible route meets the QoS requirements: Provide as output the route as the route to be taken by means of the communication interface of the radio network (120) so that the flight can start
∘ If at least one radio cell along the route does not meet the QoS requirements, another route is calculated taking into account the at least one radio cell that did not meet the QoS requirements, whereby this route is checked again with regard to the QoS requirements.

2. The method according to claim 1, **characterized in that** the possible route is calculated based on an additional criterion, wherein the criterion comprises the shortest route, the shortest time duration and/or the economic route.

3. The method according to one of the previous claims, **characterized in that** a start time and/or arrival time of the user device are transferred to the radio network (120) by means of its communication interface.

4. The method according to one of the previous claims, **characterized in that** a map with non-usable areas and/or non-usable radio cells is transferred to the radio network (120) by means of its communication interface.

5. The method according to one of the previous claims, **characterized in that** the calculation of the possible route comprises speed information, in particular speed vectors for the individual radio cells and/or time information.

6. The method according to any of the preceding claims, **characterized in that** the possible route leads the UAV (105) along such areas within a radio cell (515, 520) which are redundantly also covered by an adjacent radio cell.

7. The method according to any of the preceding claims, **characterized in that** the route planning unit informs the base stations on the to-be-routed in advance about an identity of the mobile user device, the required QoS and/or the calculated arrival time.

8. The method according to any of the previous claims, **characterized in that** the route planning unit monitors the QoS capacities of the radio cells of the route to be performed and takes measures if the QoS requirements for a radio cell along the route to be performed cannot be ensured.

9. The method according to any one of the preceding claims, **characterized in that** the route to be performed preferentially selects radio cells along a provided UAV highway (500).

10. 3GPP radio network configured to execute the steps of claim 1.

11. A route planning unit (140) of the 3GPP radio network of claim 10 for route planning of a UAV which receives control signal and/or route information by means of the radio network (120), wherein the route planning unit (140) is arranged to execute the method according to any one of claims 1-9, wherein the route planning unit comprises:
• a communication interface that is configured
∘ i) for receiving QoS requirements of the mobile user device, the start point (505), and the destination point (510) of the mobile user device to a communication interface of a route planning unit (140), optionally the communication interface is also configured to receive the starting and/or the arrival time,
∘ ii) to request and receive QoS capacity, and
∘ iii) to send a calculated route;
• a processor on which a route planning algorithm is implemented, the route planning algorithm being set up to calculate a possible route, in particular according to a criterion, based on the starting point and the destination point, the route planning algorithm being set up to request at least the QoS capacities of the radio cells on the calculated route and to compare them with the QoS requirements of the user device, the route planning algorithm being set up to send the possible route as a route to be taken by means of the communication interface.

12. A system for route planning of a UAV, which receives control signal and/or route information by means of the radio network (120) of claim 10, the system being arranged to perform the method according to any of claims 1-9, the system comprising:
• the radio network (120) comprising radio cells with base stations set up to communicate with the mobile user device, the radio cells providing QoS capacities;
• means to capture QoS capacities of radio cells;
• a route planning unit according to claim 11.

13. The system according to claim 12, **characterized in that** the route planning unit is part of a 5G core network and/or has an interface to the 5G core network.

14. The system according to any of claims 12 to 13, **characterized in that** the system comprises an authorization unit for releasing the route to be taken.

15. The system according to any one of claims 12 to 14, **characterized in that** a subset of the radio cells of the radio network (120) are arranged and/or configured as a UAV highway.

## Patentansprüche

1. Verfahren zur Routenplanung für ein unbemanntes Luftfahrzeug (105), welches mittels eines 3GPP-Funknetzwerks (120) Steuersignal- und Routeninformationen empfängt, umfassend die folgenden Schritte:
• Bereitstellen von Dienstgüteanforderungen des unbemannten Luftfahrzeugs (105) zusammen mit einem Startpunkt (505) und einem Zielpunkt (510) des unbemannten Luftfahrzeugs mittels einer Kommunikationsschnittstelle an eine Routenplanungseinheit (140) des 3GPP-Netzwerks;
• Berechnen einer möglichen Route, die mehrere Wegpunkte zwischen dem Startpunkt (505) und dem Zielpunkt (510) umfasst, durch einen Routenplanungsalgorithmus der Routenplanungseinheit (140), wobei das unbemannte Luftfahrzeug (105) Funkzellen entlang der Route durchlaufen und mit diesen Funkzellen (515, 520) kommunizieren soll, wobei die Wegpunkte eine Granularität aufweisen, die kleiner als die Größe der Funkzellen ist, und wobei die mögliche Route basierend auf einem Kriterium höchster Zuverlässigkeit berechnet wird;
• Anfordern von Dienstgütekapazitäten der Funkzellen (515, 520) entlang der möglichen Route;
• Verifizieren, dass die Dienstgütekapazitäten jeder Funkzelle (515, 520) entlang der Route den Dienstgüteanforderungen genügen:
∘ falls jede Funkzelle (515, 520) entlang der möglichen Route die Dienstgüteanforderungen erfüllt: Bereitstellen, als Ausgabe, der Route als die zu nehmende Route unter Verwendung der Kommunikationsschnittstelle des Funknetzwerks (120), so dass der Flug beginnen kann,
∘ wobei, falls mindestens eine Funkzelle entlang der Route die Dienstgüteanforderungen nicht erfüllt, unter Berücksichtigung der mindestens einen Funkzelle, die die Dienstgüteanforderungen nicht erfüllt hat, eine weitere Route berechnet wird, wobei diese Route erneut in Bezug auf die Dienstgüteanforderungen geprüft wird.

2. Verfahren nach Anspruch 1, **dadurch gekennzeichnet, dass** die mögliche Route basierend auf einem zusätzlichen Kriterium berechnet wird, wobei das Kriterium die kürzeste Route, die kürzte Zeitdauer und/oder die wirtschaftliche Route umfasst.

3. Verfahren nach einem der vorherigen Ansprüche, **dadurch gekennzeichnet, dass** eine Startzeit und/oder eine Ankunftszeit der Benutzervorrichtung mittels dessen Kommunikationsschnittstelle an das Funknetzwerk (120) transferiert werden.

4. Verfahren nach einem der vorherigen Ansprüche, **dadurch gekennzeichnet, dass** eine Karte mit nicht verwendbaren Bereichen und/oder nicht verwendbaren Funkzellen mittels dessen Kommunikationsschnittstelle an das Funknetzwerk (120) transferiert wird.

5. Verfahren nach einem der vorherigen Ansprüche, **dadurch gekennzeichnet, dass** die Berechnung der möglichen Route Geschwindigkeitsinformationen umfasst, insbesondere Geschwindigkeitsvektoren für die individuellen Funkzellen und/oder Zeitinformationen.

6. Verfahren nach einem der vorhergehenden Ansprüche, **dadurch gekennzeichnet, dass** die mögliche Route das unbemannte Luftfahrzeug (105) entlang solcher Bereiche innerhalb einer Funkzelle (515, 520) führt, die redundant auch von einer benachbarten Funkzelle abgedeckt werden.

7. Verfahren nach einem der vorherigen Ansprüche, **dadurch gekennzeichnet, dass** die Routenplanungseinheit die Basisstationen auf der zu vollführenden Route im Voraus über eine Identität der mobilen Benutzervorrichtung, die erforderliche Dienstgüte und/oder die berechnete Ankunftszeit informiert.

8. Verfahren nach einem der vorhergehenden Ansprüche, **dadurch gekennzeichnet, dass** die Routenplanungseinheit die Dienstgütekapazitäten der Funkzellen auf der zu vollführenden Route überwacht und Maßnahmen ergreift, falls die Dienstgüteanforderungen für eine Funkzelle entlang der zu vollführenden Route nicht gewährleistet werden können.

9. Verfahren nach einem der vorhergehenden Ansprüche, **dadurch gekennzeichnet, dass** die zu vollführende Route vorzugsweise Funkzellen entlang einem bereitgestellten Highway (500) für unbemannte Luftfahrzeuge auswählt.

10. 3GPP-Funknetzwerk, dazu eingerichtet, die Schritte nach Anspruch 1 auszuführen.

11. Routenplanungseinheit (140) des 3GPP-Funknetzwerks nach Anspruch 10 zur Routenplanung eines unbemannten Luftfahrzeugs, das mittels des Funknetzwerks (120) Steuersignal- und/oder Routeninformationen empfängt, wobei die Routenplanungseinheit (140) dazu angeordnet ist, das Verfahren nach einem der Ansprüche 1 bis 9 auszuführen, wobei die Routenplanungseinheit umfasst:
• eine Kommunikationsschnittstelle, die dazu eingerichtet ist:
∘ i) Dienstgüteanforderungen der mobilen Benutzervorrichtung, den Startpunkt (505) und den Zielpunkt (510) der mobilen Benutzervorrichtung an eine Kommunikationsschnittstelle einer Routenplanungseinheit (140) zu empfangen, wobei optional die Kommunikationsschnittstelle auch dazu eingerichtet ist, die Start- und/oder die Ankunftszeit zu empfangen,
∘ ii) eine Dienstgütekapazität anzufordern und zu empfangen und
∘ iii) eine berechnete Route zu senden;
• einen Prozessor, auf dem ein Routenplanungsalgorithmus implementiert ist, wobei der Routenplanungsalgorithmus dazu eingerichtet ist, insbesondere gemäß einem Kriterium, eine mögliche Route basierend auf dem Startpunkt und dem Zielpunkt zu berechnen, wobei der Routenplanungsalgorithmus dazu eingerichtet ist, mindestens die Dienstgütekapazitäten der Funkzellen auf der berechneten Route anzufordern und sie mit den Dienstgüteanforderungen der Benutzervorrichtung zu vergleichen, wobei der Routenplanungsalgorithmus dazu eingerichtet ist, die mögliche Route mittels der Kommunikationsschnittstelle als eine zu nehmende Route zu senden.

12. System zur Routenplanung eines unbemannten Luftfahrzeugs, welches mittels des Funknetzwerks (120) nach Anspruch 10 Steuersignal- und/oder Routeninformationen empfängt, wobei das System dazu angeordnet ist, das Verfahren nach einem der Ansprüche 1 bis 9 durchzuführen, wobei das System umfasst:
• das Funknetzwerk (120), das Funkzellen mit Basisstationen, die dazu eingerichtet sind, mit der mobilen Benutzervorrichtung zu kommunizieren, umfasst, wobei die Funkzellen Dienstgütekapazitäten bereitstellen;
• Mittel zum Erfassen von Dienstgütekapazitäten von Funkzellen;
• eine Routenplanungseinheit nach Anspruch 11.

13. System nach Anspruch 12, **dadurch gekennzeichnet, dass** die Routenplanungseinheit Teil eines 5G-Core-Netzwerks ist und/oder eine Schnittstelle zu dem 5G-Core-Netzwerk aufweist.

14. System nach einem der Ansprüche 12 bis 13, **dadurch gekennzeichnet, dass** das System eine Autorisierungseinheit zum Freigeben der zu nehmenden Route umfasst.

15. System nach einem der Ansprüche 12 bis 14, **dadurch gekennzeichnet, dass** eine Teilmenge der Funkzellen des Funknetzwerks (120) als Highway für unbemannte Luftfahrzeuge angeordnet und/oder eingerichtet ist.

## Revendications

1. Procédé de planification d'itinéraire pour un drone (105) qui reçoit un signal de commande et des informations d'itinéraire au moyen d'un réseau radio 3GPP (120), comprenant les étapes suivantes consistant à :
• fournir des exigences de qualité de service (QoS) du drone (105), ainsi qu'un point de départ (505) et un point de destination (510), de l'UAV au moyen d'une interface de communication, à une unité de planification d'itinéraire (140) du réseau 3GPP ;
• calculer un itinéraire possible comprenant plusieurs points de passage entre le point de départ (505) et le point de destination (510) par un algorithme de planification d'itinéraire de l'unité de planification d'itinéraire (140), dans lequel le drone (105) doit traverser des cellules radio le long de l'itinéraire et communiquer avec ces cellules radio (515, 520), dans lequel les points de passage ont une granularité inférieure à la taille des cellules radio et dans lequel l'itinéraire possible est calculé selon un critère de fiabilité maximal ;
• demander des capacités QoS des cellules radio (515, 520) le long de l'itinéraire possible ;
• vérifier que les capacités QoS de chaque cellule radio (515, 520) le long de l'itinéraire répondent aux exigences QoS :
∘ si chaque cellule radio (515, 520) le long de l'itinéraire possible répond aux exigences QoS : fournir en sortie l'itinéraire à emprunter au moyen de l'interface de communication du réseau radio (120) de sorte que la vol puisse démarrer ;
∘ si au moins une cellule radio le long de l'itinéraire ne répond pas aux exigences QoS, un autre itinéraire est calculé en tenant compte d'au moins une cellule radio non conforme aux exigences QoS, moyennant quoi cet itinéraire est ensuite à nouveau vérifié au regard des exigences QoS.

2. Procédé selon la revendication 1, **caractérisé en ce que** l'itinéraire possible est calculé sur la base d'un critère supplémentaire, dans lequel l'itinéraire comprend l'itinéraire le plus court, la durée la plus courte et/ou l'itinéraire économique.

3. Procédé selon une des revendications précédentes, **caractérisé en ce qu'**une heure de départ et/ou une heure d'arrivée de l'appareil d'utilisateur sont transmises au réseau radio (120) au moyen de son interface de communication.

4. Procédé selon une des revendications précédentes, **caractérisé en ce qu'**une carte des zones non utilisables et/ou des cellules radio non utilisables est transmise au réseau radio (120) au moyen de son interface de communication.

5. Procédé selon une des revendications précédentes, **caractérisé en ce que** le calcul de l'itinéraire possible comprend des informations de vitesse, notamment des vecteurs de vitesse pour les cellules radio individuelles et/ou des informations temporelles.

6. Procédé selon une quelconque des revendications précédentes, **caractérisé en ce que** l'itinéraire possible conduit le drone (105) le long de zones d'une cellule radio (515, 520) qui sont également couvertes de manière redondante par une cellule radio adjacente.

7. Procédé selon une quelconque des revendications précédentes, **caractérisé en ce que** l'unité de planification d'itinéraire informe les stations de base à acheminer à l'avance au sujet d'une identité du terminal mobile, de la qualité de service requise et/ou de l'heure d'arrivée calculée.

8. Procédé selon une quelconque des revendications précédentes, **caractérisé en ce que** l'unité de planification d'itinéraire surveille les capacités de qualité de service des cellules radio de l'itinéraire à effectuer et prend des mesures si les exigences de qualité de service pour une cellule radio le long de l'itinéraire à effectuer ne peuvent pas être garanties.

9. Procédé selon une quelconque des revendications précédentes, **caractérisé en ce que** l'itinéraire à effectuer sélectionne préférentiellement des cellules radio le long d'une autoroute de drones (500) fournie.

10. Réseau radio 3GPP configuré pour exécuter les étapes de la revendication 1.

11. Unité de planification d'itinéraire (140) du réseau radio 3GPP selon la revendication 10, pour la planification d'itinéraire d'un drone qui reçoit un signal de commande et/ou des informations d'itinéraire au moyen du réseau radio (120), dans laquelle l'unité de planification d'itinéraire (140) est conçue pour exécuter le procédé selon une quelconque des revendications 1 à 9, dans lequel l'unité de planification d'itinéraire comprend :
• une interface de communication configurée pour
∘ i) recevoir des exigences de qualité de service (QoS) de l'appareil mobile d'utilisateur, le point de départ (505) et le point de destination (510) de l'appareil mobile d'utilisateur, vers une interface de communication d'une unité de planification d'itinéraire (140), optionnellement l'interface de communication est également configurée pour recevoir l'heure de départ et/ou d'arrivée,
∘ ii) demander et recevoir la capacité QoS, et
∘ iii) envoyer un itinéraire calculé ;
• un processeur sur lequel est implémenté un algorithme de planification d'itinéraire, l'algorithme de planification d'itinéraire étant configuré pour calculer un itinéraire possible, notamment selon un critère, basé sur le point de départ et le point de destination, l'algorithme de planification d'itinéraire étant configuré pour demander au moins les capacités QoS des cellules radio sur l'itinéraire calculé et les comparer aux exigences de qualité de service de l'appareil d'utilisateur, l'algorithme de planification d'itinéraire étant configuré pour envoyer l'itinéraire possible comme itinéraire à suivre au moyen de l'interface de communication.

12. Système de planification d'itinéraire pour un drone, qui reçoit un signal de commande et/ou des informations d'itinéraire au moyen du réseau radio (120) selon la revendication 10, le système étant conçu pour mettre en œuvre le procédé selon une quelconque des revendications 1 à 9, le système comprenant :
• le réseau radio (120) comprenant des cellules radio avec des stations de base configurées pour communiquer avec l'appareil mobile d'utilisateur, les cellules radio fournissant des capacités de qualité de service (QoS) ;
• un moyen de capture des capacités de qualité de service des cellules radio ;
• une unité de planification d'itinéraire selon la revendication 11.

13. Système selon la revendication 12, **caractérisé en ce que** l'unité de planification d'itinéraire fait partie d'un réseau central 5G et/ou possède une interface avec le réseau central 5G.

14. Système selon une quelconque des revendications 12 à 13, **caractérisé en ce que** le système comprend une unité d'autorisation pour libérer l'itinéraire à emprunter.

15. Système selon une quelconque des revendications 12 à 14, **caractérisé en ce qu'**un sous-ensemble des cellules radio du réseau radio (120) sont agencées et/ou configurées comme une autoroute de drones.
